# EUROPEAN PATENT APPLICATION

(11) **EP 4 593 165 A1**
(43) Date of publication of application: **30.07.2025**
(21) Application number: 24202294.5
(22) Date of filing: 24.09.2024
(51) Int. Cl.: H01M 50/107, H01M 50/119, H01M 50/152, H01M 50/167, H01M 50/179, H01M 50/188, H01M 50/528, H01M 50/536, H01M 50/559, H01M 50/566

(54) **CYLINDRICAL SECONDARY BATTERY**

(30) Priority: 29.01.2024 KR 20240013087
(71) Applicant: Samsung SDI Co., Ltd., Yongin-si, Gyeonggi-do 17084 (KR)
(72) Inventor: KO, Sung Gwi, 17084 Yongin-si (KR); JUNG, Hyun Ki, 17084 Yongin-si (KR); LEE, Ho Jae, 17084 Yongin-si (KR)
(74) Representative: Marks & Clerk LLP

(57) **Abstract**

Embodiments relate to a cylindrical secondary battery. A cylindrical secondary battery includes an electrode assembly including a first electrode plate, a separator, and a second electrode plate, a case that accommodates the electrode assembly and of which a lower end is opened to be electrically connected to the second electrode plate, a first current collector plate disposed between a top surface of the electrode assembly and the case and electrically connected to the first electrode plate, a terminal which passes through a top surface part of the case and of which a lower end is electrically and mechanically coupled to a top surface of the first current collector plate, and a cap plate configured to seal a lower end of the case. The terminal includes a main body having a flat top surface and a welding groove recessed downward from a top surface of the terminal outside the main body.

## Description

### FIELD

Embodiments relate to a cylindrical secondary battery.

### BACKGROUND

In general, a cylindrical secondary battery may include a cylindrical electrode assembly, a cylindrical case or can accommodating the electrode assembly and an electrolyte, and a cap assembly coupled to an opening of one side of the case to seal the case and electrically connected to the electrode assembly to electrically connect an external busbar to the electrode assembly.

The above-described information that serves as the background of the present disclosure is only for improving understanding of the background of the present disclosure and thus may include information that does not constitute the related art.

### SUMMARY

Aspects of some embodiments of the present disclosure provide a cylindrical secondary battery that is capable of preventing welding impurities from being generated in a case due to welding between a terminal and a current collector plate or prevent an electrode assembly from being damaged due to welding heat.

Other aspects of some embodiments of the present disclosure provide a cylindrical secondary battery that is capable of preventing welding defects due to misalignment that can occur due to a welding groove or an increase in resistance due to an insufficient welding area if a plurality of secondary batteries are welded to each other through a busbar.

According to some embodiments, a cylindrical secondary battery includes:
an electrode assembly including a first electrode plate, a separator, and a second electrode plate; a case that accommodates the electrode assembly, wherein a lower end of the case is opened, and wherein the case is configured to be electrically connected to the second electrode plate; a first current collector plate disposed between a top surface of the electrode assembly and the case, wherein the first current collector plate is electrically connected to the first electrode plate; a terminal which passes through a top surface part of the case, wherein a lower end of the terminal is electrically and mechanically coupled to a top surface of the first current collector plate; and a cap plate configured to seal the lower end of the case, wherein
the terminal includes: a main body having a flat top surface; and a welding groove recessed downward from a top surface of the terminal outside the main body.

The welding groove may have an arc, line, or circular ring shape on a plane.

The terminal may further include a coupling part disposed outside the main body to fix the terminal to the case.

The coupling part may include: an upper coupling part disposed above the top surface part of the case; and a lower coupling part disposed below the top surface part of the case.

In the terminal, the lower coupling part may be pressed by riveting, and an end of the upper coupling part may be disposed outside the lower coupling part on a plane.

The lower coupling part may have a thickness greater than the thickness of other areas of the coupling part.

The lower coupling part may comprise a head, and an end of the head may extend further outward than an end of the upper coupling part on a plane.

The upper coupling part may be bent by being pressed outward.

The upper coupling part and the head may be combined to provide a U-shape.

A top surface of the main body may be disposed above a top surface of the coupling part such that the main body may protrude further upward than the top surface of the coupling part.

A planar size of the main body may be greater than a planar size of the coupling part.

The cylindrical secondary battery may further include a first gasket disposed between the terminal and the case to electrically separate the terminal and the case from each other.

An upper end of the first gasket may extend further than an end of the upper coupling part by a first length.

The first length may be about 2 mm or less.

The upper end of the first gasket may be bent upward to extend upward.

The first current collector plate may be welded outside the terminal through the welding groove such that the top surface of the first current collector plate is in contact with a bottom surface of the terminal and such that a welding bead is disposed in the welding groove.

In the welding groove, a width at an upper portion of the welding groove may be greater than a width at a lower portion of the welding groove.

A thickness of a lower portion of an area of the terminal in which the welding groove may be provided may be less than that of other areas of the terminal measured from a bottom surface of the terminal.

The case may include: a beading part recessed from an upper portion of the cap plate toward the inside of the case; and a crimping part disposed below the beading part and the cap plate and wherein a lower end of the case is bent inward to fix the cap plate.

The cylindrical secondary battery may further include a second gasket disposed between the cap plate and the beading part and between the cap plate and the crimping part, wherein the cap plate may be non-polar.

The cylindrical secondary battery may further include a second current collector plate disposed between a bottom surface of the electrode assembly and a cap assembly to electrically connect the second electrode plate to the beading part.

The top surface of the main body may have a diameter of about 11 mm or more.

A method of manufacturing a cylindrical secondary battery according to some embodiments includes providing a case to accommodate an electrode assembly; inserting the electrode assembly through an opened lower portion of the case, the electrode assembly comprising a first electrode plate, a separator, and a second electrode plate configured to be electrically connected to the case; fixing a first current collector plate between a top surface of the electrode assembly and the case, wherein the first current collector plate is configured to be electrically connected to the first electrode plate; inserting a terminal which extends through a top surface part of the case, wherein a lower end of the terminal is configured to be electrically and mechanically coupled to a top surface of the first current collector plate, wherein the terminal comprises a main body having a flat top surface, and a welding groove recessed downward from a top surface of the terminal outside the main body; and fixing a cap plate configured to seal the lower end of the case.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 illustrates a perspective view of a cylindrical secondary battery according to embodiments;
FIG. 2 illustrates a cross-sectional view of the cylindrical secondary battery of FIG. 1;
FIG. 3 illustrates an enlarged cross-sectional view of a portion A of FIG. 2;
FIG. 4 illustrates a cross-sectional view of a coupling method of a terminal and a case of FIG. 3;
FIG. 5 illustrates an enlarged cross-sectional view of another example of a portion A of FIG. 2; and
FIG. 6 illustrates a cross-sectional view of a coupling method of a terminal and a case of FIG. 5.

### DETAILED DESCRIPTION

Embodiments of the present disclosure may be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements.

As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the present techniques according to various process states or usage states of the present techniques, and thus, the present disclosure is not limited thereto. For example, if an element or feature shown in the drawings is turned inside out, the element or feature described as "beneath" or "below" may change into "above" or "upper". Thus, the term "lower" may encompass the term "upper" or "below".

Preferred embodiments of the present disclosure will be described in detail with reference to the accompanying drawings so that those skilled in the art may easily implement the present disclosure.

Here, throughout the specification, parts having similar configurations and operations are denoted by the same reference numerals. Also, in this specification below, if any portion is referred to as being "electrically connected" to another portion, it should be understood that the former may be "directly connected" to the latter, or "connected" to the latter via an intervening member.

As described herein, a cylindrical secondary battery may include a cylindrical electrode assembly, a cylindrical case or can accommodating the electrode assembly and an electrolyte, and a cap assembly. In the case of a battery module using a plurality of cylindrical secondary batteries, which are connected to each other, because busbars have to be connected to upper and lower portions of the secondary batteries, respectively, there is a limitation in that a structure is complicated, and a process time increases.

To solve this limitation, a case may be provided with a terminal hole at each of one opened side and an opposite side, and a positive electrode rivet terminal and the case are coupled to be insulated from each other inside the terminal hole. In this structure, a busbar may be provided on the same surface of the secondary battery to facilitate the connection of the busbar in the secondary battery module.

However, to prevent foreign substances from being generated inside the electrode assembly, welding may have been performed between the rivet terminal and the current collector plate of the electrode assembly through a groove provided outside the rivet terminal. However, if an error occurs in alignment during the welding with the busbar due to the groove on the outside of the rivet terminal, an insufficient welding area or welding defects may occur.

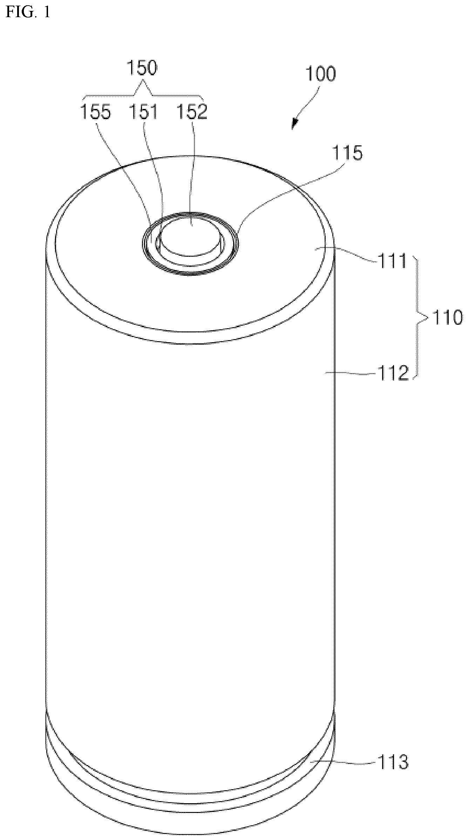

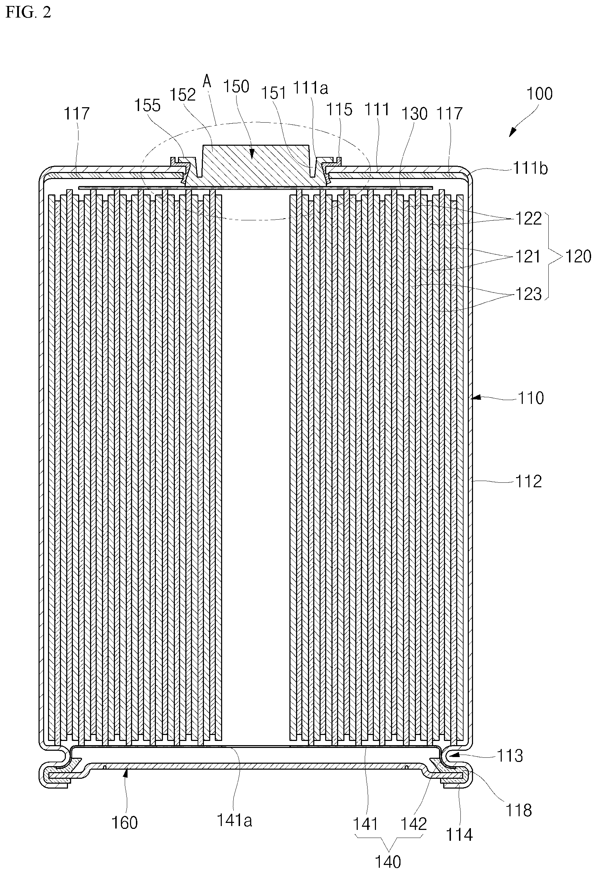

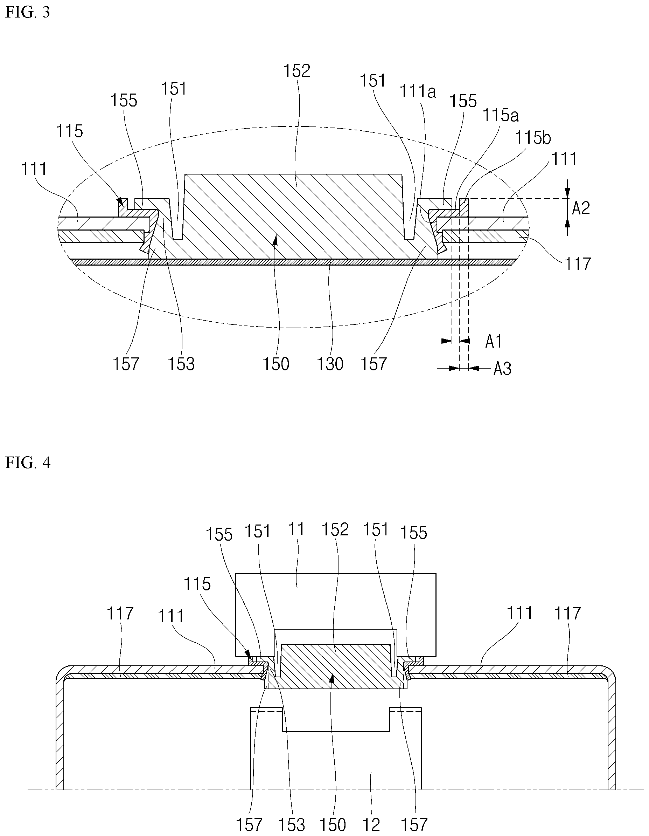

FIG. 1 illustrates a perspective view of a cylindrical secondary battery 100 according to embodiments. FIG. 2 illustrates a cross-sectional view of the cylindrical secondary battery 100 of FIG. 1. FIG. 3 illustrates an enlarged cross-sectional view of a portion A of FIG. 2. Hereinafter, the cylindrical secondary battery 100 will be described with reference to FIGS. 1 to 3.

As illustrated in FIGS. 1 and 2, a secondary battery 100, according to some embodiments, may include a case 110, an electrode assembly 120 accommodated in the case 110, a terminal 150 coupled to a terminal hole provided in one end of the case 110, and a cap plate 160 that seals an opening of the other end of the case 110.

The case 110 may include a circular top surface part 111, and a side surface part 112 extending by a predetermined length upward from an edge of the top surface part 111. The top surface part 111 and the side surface part 112 of the case 110 may be integrated with each other. In some embodiments, a bent part 111b bent in a round shape may be provided between the top surface part 111 and the side surface part 112.

The circular top surface part 111 may have a flat circular plate shape and may include a terminal hole 111a passing through a central portion thereof. The terminal 150 may be inserted into and coupled to the terminal hole 111a of the top surface part 111. A first gasket 115 for sealing and electrical insulation may be further disposed between the terminal hole 111a and the terminal 150. The first gasket 115 may block contact between the terminal 150 and the case 110 to electrically separate the terminal 150 and the case 110 from each other. The first gasket 115 may seal the terminal hole 111a of the top surface part 111 of the case 110. The first gasket 115 may be made of a resin material such as polyethylene (PE), polypropylene (PP), polyethylene terephthalate (PET), or the like.

In some embodiments, the case 110 may further include an inner insulating member 117 provided to cover an inner surface of the top surface part 111. In some embodiments, the inner insulating member 117 may be attached to the inner surface of the top surface part 111 by coating or adhesion. In some embodiments, the inner surface of the top surface part 111 may be a surface facing a top surface of the electrode assembly 120 and may be a bottom surface of the top surface part 111. The inner insulating member 117 may prevent the top surface part 111 of the case 110 and the first electrode plate 121 of the electrode assembly 120 from being in contact with each other. In some embodiments, the inner insulating member 117 may extend to an inner surface of the bent part 111b. The inner insulating member 117 may be provided to cover the inner surfaces of the top surface part 111 and the bent part 111b or may be provided to cover only the inner surface of the top surface part 111.

In the cylindrical secondary battery 100, a lower portion of the case 110 may be opened during a manufacturing process. In some embodiments, during the manufacturing process, the electrode assembly 120 may be inserted together with an electrolyte through an opened lower portion of the case 110. In some embodiments, the electrolyte and the electrode assembly 120 may be inserted into the case 110 in a state in which the opened lower portion of the case 110 faces an upper side. After the electrolyte and the electrode assembly 120 are inserted into the case 110, the cap plate 160 may be coupled to the opened lower end to seal the inside of the case 110. In some embodiments, the electrolyte may serve to enable movement of lithium ions between a positive electrode plate 121 and a negative electrode plate 122, which constitute the electrode assembly 120. The electrolyte may be a non-aqueous organic electrolyte that is a mixture of lithium salt and a high-purity organic solvent. Furthermore, the electrolyte may be a polymer using a polymer electrolyte or a solid electrolyte, as the type of the electrolyte is not so limited here.

The case 110 may be made of steel, a steel alloy, aluminium, an aluminium alloy, or an equivalent thereof, but the material thereof is not limited thereto. In some embodiments, in the case 110, a beading part 113 recessed inward may be provided in an upper portion of the case 110 with respect to the cap plate 160 to prevent the electrode assembly 120 from being separated, and a crimping part 114 bent inward may be provided at a lower portion of the case 110 and may be disposed below the beading part 113 and the cap plate 160.

In the case 110, after the electrode assembly 120 is inserted through the opened lower end, the beading part 113 may be provided to prevent the electrode assembly 120 from being separated from the case 110.

The electrode assembly 120 may include the first electrode plate 121, the second electrode plate 122, and a separator 123. The first electrode plate 121 may be a positive electrode plate, and the second electrode plate 122 may be a negative electrode plate, and vice versa. Hereinafter, for simplicity of description, the first electrode plate 121 will be referred to as the positive electrode plate, and the second electrode plate 122 will be referred to as the negative electrode plate; however, the first and second electrode plate are not so limited. As shown in FIG. 1, the electrode assembly 120 may include one or more first electrode plates 121, one or more second electrode plates 122, and one or more separators 123.

In some embodiments, for the first electrode plate 121, at least one surface of plate-shaped metal foil made of aluminium (Al) is coated with a positive electrode active material made of transition metal oxide. In some embodiments, the first electrode plate 121 may be provided with a positive electrode non-coated portion, which is not coated with the positive electrode active material, such as on an upper end thereof. The positive electrode non-coated portion may protrude toward an upper side of the electrode assembly 120. In some embodiments, the positive electrode non-coated portion of the first electrode plate 121 may protrude further upward than the second electrode plate 122 and the separator 123.

The second electrode plate 122 may be coated with a negative electrode active material such as graphite or carbon on at least one surface of plate-shaped metal foil made of copper (Cu) or nickel (Ni). In some embodiments, the second electrode plate 122 may be provided with a negative electrode non-coated portion, which is not coated with the negative electrode active material, such as on a lower end thereof. The negative electrode non-coated portion may protrude toward a lower side of the electrode assembly 120. In some embodiments, the negative electrode non-coated portion of the second electrode plate 122 may protrude further downward than the first electrode plate 121 and the separator 123.

The separator 123 may be made of a polyethylene (PE) or polypropylene (PP) material, but the embodiments are not limited thereto. The separator 123 may be disposed between the first electrode 121 and the second electrode 122, such as to prevent short circuit and to allow only movement of lithium ions.

The electrode assembly 120 may be wound from a winding front end in a substantially cylindrical shape after the first electrode plate 121, the second electrode plate 122, and the separator 123 are stacked. In some embodiments, in the electrode assembly 120, the positive electrode non-coated portion that is not coated with the positive electrode active material may protrude upward from the first electrode plate 121, and the negative electrode non-coated portion that is not coated with the negative electrode active material may protrude downward from the second electrode plate 122. In some embodiments, the electrode assembly 120 may be provided so that the outermost positive electrode non-coated portion may not protrude upward, and the outermost negative electrode non-coated portion may not protrude downward. In some embodiments, the electrode assembly 120 may have a stepped portion in which the outermost side of each of the upper and lower portions is recessed further than other areas. This structure of the electrode assembly 120 may prevent the electrode assembly 120 and the case 110 from being in contact with each other if the inner insulating member 117 is not provided on the bent part 11 1b of the case 110.

A first current collector plate 130 may be a circular metal plate having a shape corresponding to the top surface of the electrode assembly 120. A planar size (e.g., an area) of the first current collector plate 130 may be equal to or less than a size of the top surface of the electrode assembly 120. The first current collector plate 130 may be made of aluminium (Al). The first current collector plate 130 may be fixed and electrically connected to the first electrode plate 121 exposed to the upper side of the electrode assembly 120 through welding such that a bottom surface of the first current collector plate 130 is in contact with the top surface of the electrode assembly 120. The top surface may include surfaces of the one or more exposed electrode plates. The first current collector plate 130 may be fixed and electrically connected to the terminal 150 by welding such that the top surface of the first current collector plate is in contact with the bottom surface of the terminal 150. The first current collector plate 130 may serve as a path for a current flow between the first electrode plate 121 of the electrode assembly 120 and the terminal 150. The first current collector plate 130 may be welded to the electrode assembly 120, accommodated in the case 110, and then welded to the terminal 150.

A second current collector plate 140 may include a circular planar part 141 corresponding to the bottom surface of the electrode assembly 120 and an extension part 142 extending downward from an edge of the planar part 141. A top surface of the planar part 141 may be in contact with the bottom surface of the electrode assembly 120. The top surface of the planar part 141 may be fixed and electrically connected to the second electrode plate 122 exposed at the lower side of the electrode assembly 120 by welding such that the top surface is in contact with the bottom surface of the electrode assembly 120. The second current collector plate may be disposed between a bottom surface of the electrode assembly and a cap assembly to electrically connect the second electrode plate to the beading part.

The extension part 142 may extend downward from the edge of the planar part 141. In some embodiments, the extension part 142 may be provided in multiple portions (e.g., multiple extension parts) to be spaced apart from each other along the edge of the planar part 141. In some embodiments, four extension parts 142 may be provided to be symmetrical to each other about the planar part 141, but the embodiments are not limited thereto. The extension part 142 may be bent to extend downward from the edge of the planar part 141. In some embodiments, the extension part 142 may be rounded or bent along the beading part 113 so as to be in contact with an inner surface of the beading part 113. The end of the extension part 142 may be disposed between the beading part 113 and a second gasket 118. The second gasket 118 may be disposed between the cap plate 160 and the beading part 113 and between the cap plate 160 and the crimping part 114. In some embodiments, the cap plate 160 may be non-polar. The extension part 142 may be in contact with and may be coupled to the beading part 113 of the case 110. In some embodiments, the extension part 142 may be coupled by welding to be in contact with an inner surface of the beading part 113 of the case 110. The second current collector plate 140 may serve as a path for a current flow between the second electrode plate 122 of the electrode assembly 120 and the case 110. In some embodiments, the case 110 may be a negative electrode terminal. In some embodiments, the second current collector plate 140 may be provided with a hole 141a passing between the top and bottom surfaces at a center of the planar part 141, and the electrolyte may be injected into the electrode assembly 120 through the hole 141a with ease.

The terminal 150 may be inserted into a terminal hole 111a provided in the top surface part 111 of the case 110 and may be in contact with and electrically connected to the first electrode collector plate 130. The terminal 150 may be electrically connected to the first electrode plate 121 of the electrode assembly 120 through the first current collector plate 130. In some embodiments, the terminal 150 may be a positive electrode terminal. The terminal 150 and the case 110 may have different polarities. The terminal 150 may be made of the same or similar material as each of the first current collector plate 130 and the first electrode plate 121, such as including but not limited to aluminium (Al).

An upper portion of the terminal 150 may be exposed to the outside of the case 110 and be in contact with and electrically connected to a busbar (not shown), and a lower portion of the terminal 150 may be in contact with and electrically connected to the first current collector plate 130 inside the case 110. In some embodiments, the first gasket 115 may be disposed between the terminal 150 and the case 110. The terminal 150 may be compressed and deformed (e.g., compression molded) by riveting to seal the terminal hole 11 1a by pressing the first gasket 115. The first gasket 115 may be disposed between the terminal 150 and the terminal hole 111a of the case 110, and thus, the terminal 150 and the case 110 may be sealed to be electrically insulated from each other.

The terminal 150 and the first current collector 130 may be coupled to each other by welding, such as described above. The bottom surface of the terminal 150, which may be in contact with the first current collector plate 130, may be a flat plane. In some embodiments, the terminal 150 and the first current collector plate 130 may be welded to each other outside the terminal 150, and thus, the terminal 150 may be provided with a welding groove 151. The welding groove 151 may be defined to be recessed downward from the top surface of the terminal 150.

Referring to FIGS. 2 and 3, the terminal 150 may include a main body 152 and a coupling part 153. The welding groove 151 may be defined outside the main body 152. In some embodiments, the main body 152 may define the central portion of the terminal 150 if viewed from above, and the coupling part 153 may be disposed around the main body 152. The welding groove 151 may be defined between the main body 152 and the coupling part 153. A bottom surface of the main body 152 may be disposed inside the case 110 and may be in contact with and electrically connected to the first current collector plate 130. A top surface of the main body 152 may be disposed outside the case 110 and may be in contact with and electrically connected to a busbar.

As illustrated in FIGS. 2 and 3, the top surface of the main body 152, which may be in contact with the busbar, may be provided as a flat surface. In some embodiments, a diameter of the flat top surface of the main body 152 may be about 11 mm or more, such as about 11 mm to about 14 mm. If the diameter of the flat top surface of the main body 152 is less than about 11 mm, welding defects may occur if misalignment between the plurality of cells occurs. If the diameter is greater than about 14 mm, the size may be unnecessarily increased. As a result, the flat top surface of the main body 152, on which the busbar may be welded, may have a sufficient surface and size for firm welding. As a result, the welding may be performed stably and easily.

In some embodiments, due to a size of the top surface of the main body 152, if connecting the plurality of cylindrical secondary batteries to each other through a busbar, the welding may be performed even if a deviation in alignment of the terminals of each cylindrical secondary battery occurs.

The welding groove 151 may have an arc, line, or circular ring shape on a plane. An upper portion of the welding groove 151 may have a width greater than that of a lower portion of the welding groove 151. Here, the width may refer to a distance between an outer surface of the main body 152 and an inner surface of the coupling part 153 if the battery is cut in a longitudinal direction. The terminal 150 may have a smaller thickness for an area on which the welding groove 151 is defined, such that the thickness is less than that of other areas of the terminal 150. In some embodiments, the smaller thickness may be a thickness measured vertically from the bottom surface of the terminal 150 (e.g., the bottom surface welded to the first current collector plate).

The welding (e.g., laser welding) may be applied to the welding groove 151 provided in the terminal 150, and thus, welding coupling may be formed between the terminal 150 and the first current collector 130 below the bottom of the welding groove 151. Because the welding of the terminal 150 and the first current collector 130 may be performed through the welding groove 151 defined outside the terminal 150, generation of a foreign substance, which may be caused by the welding, within the existing case 110, may be prevented. Thus, damage to the electrode assembly 120 (e.g., within the existing case 110) due to the welding heat may be prevented. In some embodiments, because the terminal 150 is welded from the outside of the case 110 through the welding groove 151, a welded bead may be disposed within the welding groove 151.

The coupling part 153 may be disposed outside the main body 152 with the welding groove 151 therebetween and may be coupled to the top surface part 111 of the case by the riveting. Referring to FIG. 3, the coupling part 153 may include an upper coupling part 155 that covers an upper portion of the top surface part 111 around the terminal hole 111a with the first gasket 115 therebetween. A top surface of the upper coupling part 155 may be disposed lower than the top surface of the main body 152. In some embodiments, the main body 152 may protrude upward further than the coupling part 153. In some embodiments, a planar size (e.g., an area) of the upper coupling part 155 may be less than that of the main body 152.

The terminal 150 may be coupled from the outside to the inside of the case 110. In some embodiments, the upper coupling part 155 of the terminal 150 may be disposed above the top surface part 111 of the case 110. The upper coupling part 155 may have a shape bent outward on a plane from an upper end of the coupling part 153.

An upper end of the first gasket 115 may extend further outward (e.g., on a plane) than the end of the upper coupling part 155. In some embodiments, a length of the first gasket 115 extending further than the upper coupling part 155 may be about 2 mm or less. The upper end of the first gasket 115 may be bent upward (e.g., to extend upward) and may extend so as to cover the upper side of the case 110. The first gasket 115 may include a first extension part 115a extending outward from the upper coupling part 155 and a second extension part 115b bent from the first extension part 115a to extend upward. In some embodiments, the sum of a length A1 of the first extension part 115a, a length A2 of the second extension part 115b, and a thickness A3 of the second extension part 115b may be a length of the first gasket 115 that extends further than the upper coupling part 155 and may be about 2 mm or less. The length A1 of the first extension part 115a may be a spaced distance between the end of the upper coupling part 155 and the second extension part 115b. The length A2 of the second extension 115b may be a length from the top surface part 111 of the case 110 to the upper end of the first gasket 115. In some embodiments, the thickness A3 of the second extension part 115b may be a contact length with the top surface part 111 of the case 110 from an end of the first extension part 115a to the outermost side of the first gasket 115. In some embodiments, the second extension part 115b of the first gasket 115 may be bent upward to improve insulation efficiency without reducing the area capable of covering the top surface part 111 of the case that may be the negative electrode terminal. The first gasket 115 may prevent the terminal 150 and the case 110 from being in contact with each other.

The coupling part 153 may include a lower coupling part 157 that is riveted to press the lower portion of the case 110 around the terminal hole 111a. The lower coupling part 157 may be provided by being deformed in which the lower coupling part 157 is caused to expand in a transverse direction by plastic deformation caused by riveting. In some embodiments, the lower coupling part may be disposed below the top surface part of the case.

The lower coupling part 157 may be provided by press processing using an upper jig and a lower jig. As illustrated in FIG. 4, the terminal 150 may be inserted inward from the outside of the case 110, and then, in the state in which the upper jig 11 supporting the upper coupling part 155 is fixed, the lower jig 12 may be pressed upward from a lower side of the terminal 150, and thus, the lower coupling part 157 may be provided. A diameter of the lower coupling part 157 may be greater than that of each of other areas of the coupling part 153. That is, the terminal 150 may be inserted into the terminal hole 111a in a state in which the diameter of the lower coupling part 157 is the same as an outer diameter of the terminal hole 111a, and then, the terminal 150 may be pressed and deformed by the jigs 11 and 12 so that the diameter of the lower coupling part 157 is greater than the outer diameter of the terminal hole 111a (e.g., deformation caused by riveting). In some embodiments, the thickness of the lower coupling part 157 may increase and/or be greater compared to other areas of the coupling parts 153 and 155. In some embodiments, the end of the upper coupling part 155 may extend further outward on the plane than the lower coupling part 157. In some embodiments, the end of the upper coupling part 155 is disposed outside the lower coupling part 157 on a plane.

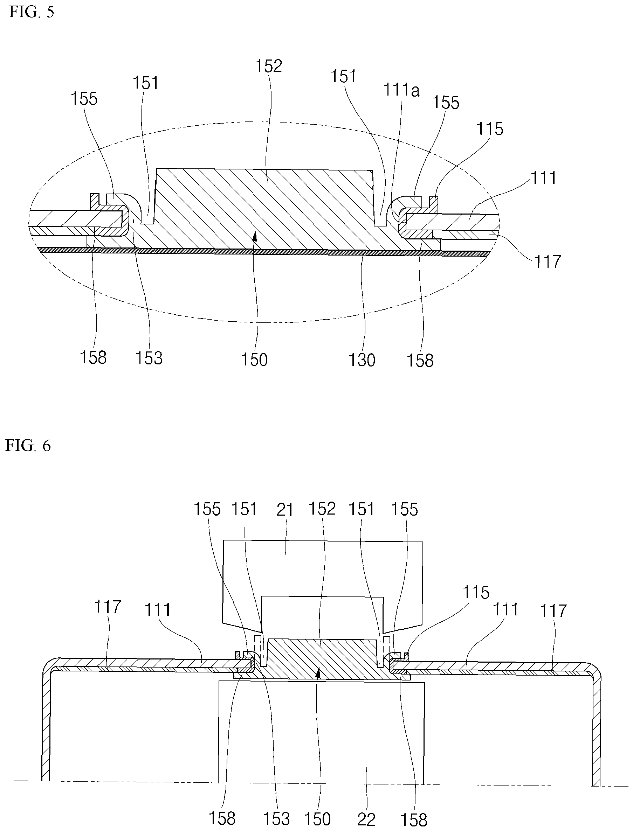

FIG. 5 illustrates an enlarged cross-sectional view of another example of a portion A of FIG. 2. The same reference numerals may be used for the same parts as those in FIG. 3, and duplicated descriptions may be omitted but apply to such parts shown in FIG. 5. Referring to FIG. 5, the terminal 150 may include a head part 158 at a lower portion thereof, and the head part 158 may support a lower portion of the case 110 around the terminal hole 111a of the top surface part 111. The head part 158 may be referred to as a lower coupling part. The terminal 150 may be coupled to the terminal hole 111a outward from the inside of the case 110.

In some embodiments, the first gasket 115 may be disposed between the head part 158 and the corresponding portion of the case 110 to provide electrical insulation. The upper coupling part 155 and the head part 158 may be combined to provide an approximately U-shape so as to surround the end of the case 110 that defines the terminal hole 111a, at the upper and lower sides of the top surface part 111. The upper coupling part 155 may be provided by press processing using an upper jig and a lower jig. As illustrated in FIG. 6, in a state in which a lower jig 22 is fixed to support the head part 158, the upper coupling part 155 may be pressed downward from an initial above state before being deformed by an upper jig 21 to provide the upper coupling part 155. The upper coupling part 155 may overlap the case 110 on a plane by applying a pressure, and the upper coupling part may have a rounded shape without edges from the end of the coupling part facing toward the welding groove 151 by the bending.

In some embodiments, an end of the head part 158 may be disposed outside the end of the upper coupling part 155 on the plane. An end of the head may extend further outward than an end of the upper coupling part on a plane. In some embodiments, the area on which the head part 158 overlaps the top surface part 111 of the case 110 may be greater than that of the upper coupling part 155.

According to the embodiments, the terminal and the first current collector plate may be coupled to each other by welding outside the terminal through a welding groove defined outside the terminal to prevent foreign substances from being generated by the welding inside the case, to prevent the electrode assembly from being damaged by the welding heat, and to prevent a welding bead from protruding.

Furthermore, a main body defining a central portion of the terminal may have a flat top surface to prevent welding defects due to misalignment that can occur due to the welding groove or an increase in resistance due to insufficient welding area if a plurality of secondary batteries are welded to each other through a busbar.
According to some embodiments, there is provided a method of manufacturing a cylindrical secondary battery. According to an embodiment, the method comprises providing a case to accommodate an electrode assembly; inserting the electrode assembly through an opened lower portion of the case, the electrode assembly comprising a first electrode plate, a separator, and a second electrode plate configured to be electrically connected to the case; fixing a first current collector plate between a top surface of the electrode assembly and the case, wherein the first current collector plate is configured to be electrically connected to the first electrode plate; inserting a terminal which extends through a top surface part of the case, wherein a lower end of the terminal is configured to be electrically and mechanically coupled to a top surface of the first current collector plate, wherein the terminal comprises a main body having a flat top surface, and a welding groove recessed downward from a top surface of the terminal outside the main body; and fixing a cap plate configured to seal the lower end of the case.
According to some embodiments, the terminal further comprises a coupling part disposed outside the main body to fix the terminal to the case.
According to some embodiments, a lower end of the case is bent inward to fix the cap plate.

The above-mentioned embodiments are merely example embodiments, and thus, the present disclosure is not limited to the foregoing embodiments, and also it will be understood by those of ordinary skill in the art that various changes in form and details may be made therein without departing from the scope of the present disclosure as defined by the following claims.

The term "about" may be used to mean within ±20% of a target value in some embodiments, within ± 10% of a target value in some embodiments, and within ±5% of a target value in some embodiments. The term "about" may equal the target value.

## Claims

1. A cylindrical secondary battery comprising:
an electrode assembly comprising:
a first electrode plate,
a separator, and
a second electrode plate;
a case that accommodates the electrode assembly, wherein a lower end of the case is opened, and wherein the case is configured to be electrically connected to the second electrode plate;
a first current collector plate disposed between a top surface of the electrode assembly and the case, wherein the first current collector plate is electrically connected to the first electrode plate;
a terminal which passes through a top surface part of the case, wherein a lower end of the terminal is electrically and mechanically coupled to a top surface of the first current collector plate; and
a cap plate configured to seal the lower end of the case,
wherein the terminal comprises:
a main body having a flat top surface, and
a welding groove recessed downward from a top surface of the terminal outside the main body.

2. The cylindrical secondary battery as claimed in claim 1, wherein the welding groove has an arc, line, or circular ring shape on a plane.

3. The cylindrical secondary battery as claimed in claim 1 or claim 2, wherein the terminal further comprises a coupling part disposed outside the main body to fix the terminal to the case.

4. The cylindrical secondary battery as claimed in claim 3, wherein the coupling part comprises:
an upper coupling part disposed above the top surface part of the case; and
a lower coupling part disposed below the top surface part of the case.

5. The cylindrical secondary battery as claimed in claim 4, wherein:
the lower coupling part is pressed by riveting, and
an end of the upper coupling part is disposed outside the lower coupling part on a plane, optionally wherein the lower coupling part has a thickness greater than the thickness of other areas of the coupling part.

6. The cylindrical secondary battery as claimed in claim 4, wherein the lower coupling part comprises a head, and an end of the head extends further outward than an end of the upper coupling part on a plane.

7. The cylindrical secondary battery as claimed in claim 6, wherein:
(i) the upper coupling part is bent by being pressed outward; and/or
(ii) the upper coupling part and the head are combined to provide a U-shape.

8. The cylindrical secondary battery as claimed in any one of claims 3 to 7, wherein:
(i) a top surface of the main body is disposed above a top surface of the coupling part such that the main body protrudes upward further than the top surface of the coupling part; and/or
(ii) a planar size of the main body is greater than a planar size of the coupling part.

9. The cylindrical secondary battery as claimed in any one of claims 4 to 8, further comprising a first gasket disposed between the terminal and the case to electrically separate the terminal and the case from each other.

10. The cylindrical secondary battery as claimed in claim 9, wherein an upper end of the first gasket extends further than an end of the upper coupling part by a first length.

11. The cylindrical secondary battery as claimed in claim 10, wherein:
(i) the first length is about 2 mm or less; and/or
(ii) the upper end of the first gasket is bent upward to extend upward.

12. The cylindrical secondary battery as claimed in any one of claims 1 to 11, wherein:
(i) the first current collector plate is welded outside the terminal through the welding groove such that the top surface of the first current collector plate is in contact with a bottom surface of the terminal and such that a welding bead is disposed in the welding groove; and/or
(ii) in the welding groove, a width at an upper portion of the welding groove is greater than a width at a lower portion of the welding groove; and/or
(iii) a thickness of a lower portion of an area of the terminal in which the welding groove is provided is less than that of other areas of the terminal measured from a bottom surface of the terminal.

13. The cylindrical secondary battery as claimed in any one of claims 1 to 12, wherein the case comprises a beading part recessed from an upper portion of the cap plate toward the inside of the case, and a crimping part disposed below the beading part and the cap plate; and
wherein a lower end of the case is bent inward to fix the cap plate.

14. The cylindrical secondary battery as claimed in claim 13, further comprising:
(i) a second gasket disposed between the cap plate and the beading part and between the cap plate and the crimping part, wherein the cap plate is non-polar; and/or
(ii) a second current collector plate disposed between a bottom surface of the electrode assembly and a cap assembly to electrically connect the second electrode plate to the beading part.

15. The cylindrical secondary battery as claimed in any one of claims 1 to 14, wherein the top surface of the main body has a diameter of about 11 mm or more.
